# FASCICULE DE BREVET EUROPEEN

(11) **EP 0 903 829 B1**
(45) Date de publication et mention de la délivrance du brevet: **12.10.2005**
(21) Numéro de dépôt: 98410088.3
(22) Date de dépôt: 06.08.1998
(51) Int. Cl.: H02J 3/01

(54) **Dispositif de filtrage comportant un circuit de controle et appareil électrique comportant un tel dispositif**
Filteranordnung mit Steuerschaltung und elektrische Vorrichtung mit einer solchen Anordnung
Filter device having a control circuit and electric apparatus using such device

(30) Priorité: 21.08.1997 FR 9710669
(43) Date de publication de la demande: 24.03.1999
(73) Titulaire: SCHNEIDER ELECTRIC INDUSTRIES SAS, 92500 Rueil-Malmaison (FR)
(72) Inventeur: Wang, Miao-Xin, 38050 Grenoble cedex 09 (FR)
(74) Mandataire: Jouvray, Marie-Andrée

(56) Documents cités:
- EP-A- 0 645 866
- EP-A- 0 742 631
- US-A- 4 394 614
- US-A- 5 434 497

## Description

L'invention concerne un dispositif de filtrage selon le préambule de la revendication 1 ainsi qu'un appareil électrique comportant au moins un tel dispositif.

Les dispositifs de filtrage sont utilisés pour éliminer ou atténuer des courants ou des tensions harmoniques dans des réseaux de distribution électrique. Les courants harmoniques sont provoqués par des charges non-linéaires connectées aux réseaux de distribution. Les charges perturbatrices les plus répandues sont des alimentations à découpage, des convertisseurs ou des régulateurs comportant des composants électroniques de puissance.

Un accroissement du taux de courants ou de tensions harmoniques dans le réseau de distribution risque de perturber le fonctionnement ou d'endommager les charges électriques sensibles. Pour limiter le taux de courants ou de tensions harmoniques, il est connu d'utiliser des dispositifs de filtrage connectés sur des lignes du réseau.

Les dispositifs de filtrage comportent généralement des filtres passifs et des filtres actifs. Les filtres passifs fonctionnent comme des puits de courant et absorbent les harmoniques de fréquences sensiblement égales aux fréquences de résonance desdits filtres. Les filtres actifs permettent de rétablir un courant sinusoïdal dans le réseau en compensant les courants déformés par des charges non linéaires. La compensation se fait en injectant un courant de correction en parallèle dans le réseau. Le courant du réseau correspond alors à la somme du courant de charge déformé et du courant de correction.

Les filtres passifs comportent, généralement, des cellules de filtrage comportant chacune une inductance en série avec un condensateur. Chaque cellule de filtrage est accordée à une fréquence harmonique des courants perturbateurs. Pour être efficaces, ces filtres doivent être parfaitement accordés à ladite fréquence harmonique. Mais il est très difficile d'obtenir des composants passifs de grande précision pour des puissances élevées. De plus, les caractéristiques des composants risquent de changer en vieillissant ou lorsque la température d'utilisation varie. Une autre difficulté liée à l'utilisation des filtres passifs concerne leur mise en parallèle. En effet, l'association de plusieurs cellules de filtrage passifs crée des interactions entre les cellules et modifie les fréquences d'accord desdites cellules. De même, la connexion sur les lignes de condensateur de compensation de puissance réactive crée des perturbations dans les dispositifs de filtrage en modifiant les fréquences d'accord. Les filtres passifs bande étroite peuvent aussi perdre de leur efficacité si la fréquence fondamentale du réseau varie, même dans de faibles proportions.

Les filtres actifs sont moins sensibles aux variations de configuration d'une installation électrique puisqu'ils disposent généralement de dispositifs de contrôle asservis. Cependant, les filtres actifs sont limités en puissance à cause des composants électroniques qu'ils comportent. En effet, des composants électroniques de puissance linéaire, tels que des transistors, sont limités en tension et en courant.

Il existe des dispositifs de filtrage hybrides comportant des filtres passifs et des filtres actifs. Cependant, ces dispositifs sont complexes et coûteux. Ils sont généralement destinés à des applications très spécifiques.

EP-A-0 645 866 décrit un dispositif comportant les caractéristiques du préambule de la revendication 1.

L'invention a pour but un dispositif de filtrage peu sensible aux variations d'impédance d'un réseau et aux dérives de valeurs de composants.

Ce but est atteint par un dispositif de filtrage selon la revendication 1.

Avantageusement, la fréquence de résonance de la au moins une cellule de filtrage passif est supérieure à au moins une fréquence harmonique prédéterminée.

De préférence, les moyens de commutation sont commandés en fermeture par des signaux d'impulsions et en ouverture par un passage à zéro d'un courant de filtrage qui les traverse.

Notamment, les moyens de commutation comportent deux thyristors connectés en tête-bêche.

De préférence, les premier et second signaux d'impulsions sont sensiblement en opposition de phase.

Avantageusement, les moyens de contrôle comportent des moyens générateurs d'impulsions fournissant les premier et second signaux d'impulsions et des moyens de synchronisation connectés à la ligne du réseau et auxdits moyens générateurs pour synchroniser les signaux d'impulsions avec un signal représentatif de la tension de ligne du réseau.

Pour contrôler l'amplitude du courant de filtrage, les moyens de contrôle comportent des moyens de modulation de la phase entre les premier et second signaux d'impulsions en fonction d'un signal représentatif de la tension de ladite au moins ligne du réseau.

Dans un mode de réalisation particulier, les moyens de contrôle comportent des moyens de traitement de signaux connectés aux premiers moyens de mesure de grandeur électrique de ligne pour extraire un signal représentatif de ladite au moins une fréquence harmonique dudit signal de grandeur électrique de ligne.

De préférence, le dispositif de filtrage comporte des seconds moyens de mesure de courant connectés aux moyens de traitement de signaux pour fournir un signal représentatif d'un courant de filtrage circulant dans au moins une cellule de filtrage, lesdits moyens de traitement de signaux comparant le signal représentatif d'un courant de filtrage et le signal représentatif de ladite au moins une fréquence harmonique du signal de grandeur électrique de ligne.

Les moyens de traitement de signaux déterminent une différence d'amplitude entre le signal représentatif de ladite au moins une fréquence harmonique du signal de grandeur électrique de ligne et le signal représentatif d'un courant de filtrage pour asservir la commande des moyens de commutation de manière à réduire ladite au moins différence d'amplitude.

Les moyens de traitement de signaux déterminent un déphasage entre le signal représentatif de ladite au moins une fréquence harmonique du signal de grandeur électrique de ligne et le signal représentatif d'un courant de filtrage pour commander les moyens de commutation de manière à réduire ledit déphasage.

Pour linéariser le courant de filtrage, le dispositif de filtrage comporte une inductance disposée en parallèle sur les moyens de commutation.

Selon un développement de l'invention, le dispositif de filtrage comporte plusieurs cellules de filtrage passif accordées à des fréquences différentes et commandées chacune par des moyens de commutation différents, les moyens de contrôle commandant chaque moyen de commutation en fonction de fréquences harmoniques différentes.

Selon une première variante, les premiers moyens de mesure de grandeur électrique de ligne comportent des moyens de mesure de courant disposés sur ladite ligne du réseau entre une charge électrique perturbatrice et une cellule de filtrage.

Selon une seconde variante, les premiers moyens de mesure de grandeur électrique de ligne comportent des moyens de mesure de courant disposés sur ladite au moins ligne du réseau entre une source d'énergie électrique et ladite au moins une cellule de filtrage.

Selon une troisième variante, les premiers moyens de mesure de grandeur électrique comportent des moyens de mesure de tension connectés à ladite au moins une ligne du réseau.

Dans d'autres modes de réalisation, le dispositif de filtrage peut comporter des moyens de filtrage actif connectés à une ligne du réseau électrique, un dispositif de contrôle commun connecté auxdits moyens de commutation et aux moyens de filtrage actif, et des moyens de mesure fournissant un signal représentatif d'un courant de filtrage total, ledit dispositif de contrôle commun comportant les moyens de contrôle connectés aux moyens de commutation.

Un appareil électrique comporte au moins un dispositif de filtrage selon l'invention tel que défini ci-dessus.

L'appareil électrique peut comporter aussi un dispositif de filtrage actif. Avantageusement, dans ce mode de réalisation, l'appareil électrique comporte un dispositif de contrôle commun pour commander le dispositif de filtrage actif et les moyens de commutation.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- La figure 1 montre le schéma bloc d'une installation électrique comportant un dispositif de filtrage connu,
- Les figures 2 et 3 représentent un premier et un second schémas de dispositifs de filtrage selon des modes de réalisation de l'invention détectant des perturbations de courant,
- La figure 4 représente un schéma d'un dispositif de filtrage selon un mode de réalisation de l'invention détectant des perturbations de tension,
- Les figures 5a à 5d montrent des signaux électriques dans un dispositif selon l'invention,
- La figure 6 représente un schéma d'un dispositif de filtrage comportant une inductance de lissage,
- La figure 7 montre une courbe d'un courant de filtrage d'un dispositif selon la figure 5,
- Les figures 8a à 8c montrent des courbes de courants dans un dispositif de filtrage selon un mode de réalisation de l'invention,
- Les figures 9a et 9b montrent des harmoniques de courbes de courants selon les figures 8a et 8c,
- La figure 10 représente le schéma d'un mode de réalisation d'un dispositif de filtrage selon l'invention filtrant deux harmoniques,
- Les figures 11a à 11d montrent des courbes de courant et de tension dans un dispositif de filtrage selon un mode de réalisation de l'invention comportant des moyens de modulation du courant de filtrage,
- Les figures 12 et 13 représentent un premier et un second schémas de dispositifs de filtrage selon des modes de réalisation de l'invention associés à des filtres actifs.

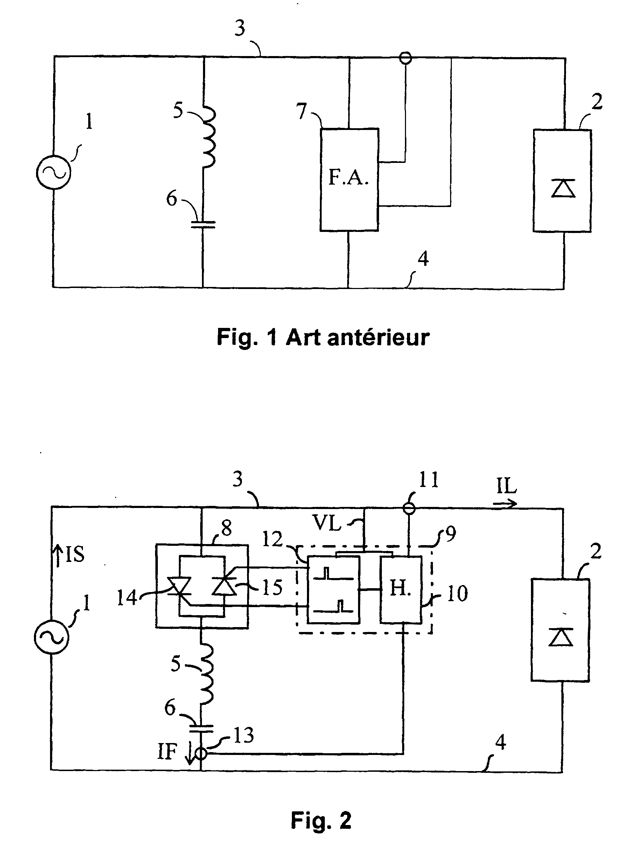

Les installations électriques comme celle représentée sur la figure 1 comportent généralement au moins une source 1 d'énergie électrique et au moins une charge électrique 2 reliées par des lignes 3 et 4. Lorsqu'une charge électrique 2 a un comportement non linéaire, des courants perturbateurs circulent dans les lignes de liaison 3 et 4. Pour éliminer ou atténuer ces courants perturbateurs, des dispositifs de filtrage sont connectés auxdites lignes 3 et 4. Un dispositif de filtrage peut comporter, comme sur la figure 1, une cellule de filtrage passif comportant une inductance 5 et un condensateur 6 reliés en série. Ces éléments forment un circuit résonant qui absorbe les courants dont la fréquence est sensiblement égale à celle de la fréquence de résonance. Il est également possible d'utiliser des filtres actifs pour atténuer les effets perturbateurs des harmoniques de courant ou de tension. Les filtres actifs connectés aux lignes de liaison 3 et 4 injectent ou absorbent des courants pour compenser les déformations des courants ou des tensions de ligne.

Les filtres passifs doivent avoir des composants d'une grande précision pour pouvoir absorber efficacement les harmoniques de courant. Cette précision est très difficile à obtenir car elle nécessite un réglage précis. De plus, les caractéristiques de composants varient dans le temps et en fonction de la température.

Les filtres actifs réalisés essentiellement avec des composants électroniques de type transistors ne conviennent pas pour des puissances très élevées.

Dans un mode de réalisation de l'invention, un dispositif de filtrage comporte au moins une cellule de filtrage passif connectée en série avec un dispositif de commutation électronique pour contrôler un courant circulant dans ladite cellule de filtrage passif. Ainsi, la précision du filtrage ne dépend plus de la précision de la cellule mais d'un circuit de commande du dispositif de commutation.

Avantageusement, un dispositif selon l'invention peut s'adapter aux variations d'impédance et de fréquence du réseau. Il est possible de faire fonctionner un dispositif selon l'invention à des fréquences de réseau différentes, par exemple à 50Hz et 60Hz, sans modifier la cellule de filtrage.

Un premier mode de réalisation est représenté sur la figure 2. Il comporte une cellule de filtrage passif composée d'une inductance 5 et d'un condensateur 6, et un commutateur électronique 8 connecté en série avec ladite cellule de filtrage. Le commutateur 8 est commandé par un circuit de contrôle 9 qui fournit des signaux de commande en fonction de signaux électriques mesurés sur au moins une ligne du réseau.

Le circuit de contrôle 9 comporte un circuit de traitement de signal 10 connecté, notamment à un capteur de courant 11 fournissant un signal représentatif d'un courant de ligne IL circulant dans la charge 2 perturbatrice. Le circuit de traitement 10 détermine les caractéristiques d'un courant harmonique à atténuer et fournit un signal de contrôle à un générateur 12 de signaux de commande. Afin d'améliorer l'efficacité du filtrage, le dispositif de la figure 2 comporte un capteur de courant 13 disposé en série avec la cellule de filtrage passif pour fournir au circuit de traitement 10 un signal représentatif d'un courant de filtrage IF. Le circuit de traitement extrait du signal de courant de ligne IL une valeur représentative de l'harmonique à atténuer HIL et la compare au signal représentatif du courant de filtrage IF. Puis, le circuit 10 contrôle le générateur 12 de manière à ce que le courant de filtrage soit en opposition de phase et de même amplitude par rapport au signal harmonique. Ainsi, dans ce mode de réalisation, le circuit de contrôle 9 fonctionne selon une boucle d'asservissement afin de rétablir un courant de source IS correct.

Avantageusement, le circuit de traitement 10 et le générateur 12 reçoivent un signal représentatif d'une tension de ligne VL pour synchroniser la détermination des valeurs représentatives de la phase des harmoniques à atténuer HIL et la fourniture des signaux de commande du commutateur 8.

De préférence, le commutateur électronique 8 comporte des composants électroniques de puissance commandés en fermeture par des impulsions et s'ouvrant lors d'un passage à zéro du courant qui les traverse. Ces composants sont avantageusement des thyristors qui permettent la commutation de forts courants et supportent des tensions élevées. Ainsi, dans un mode de réalisation préférentiel, le commutateur 8 comporte deux thyristors 14 et 15 connectés en tête-bêche en série avec la cellule de filtrage passif. Un premier thyristor 14 conduit l'alternance positive et un second thyristor 15 conduit l'alternance négative du courant de filtrage IF.Pour commander les thyristors 14 et 15, le générateur 12 fournit des impulsions de commande aux gâchettes desdits thyristors.

Afin d'éviter les inconvénients dus aux imprécisions et aux variations de caractéristiques des composants passifs 5 et 6, le commutateur 8 est commandé à une fréquence moyenne sensiblement égale à la fréquence de l'harmonique HIL à atténuer. Avec un commutateur 8 à deux thyristors, les signaux d'impulsion fournis par le générateur 12 à chaque thyristor sont sensiblement en opposition de phase ou décalés d'une demi-période.

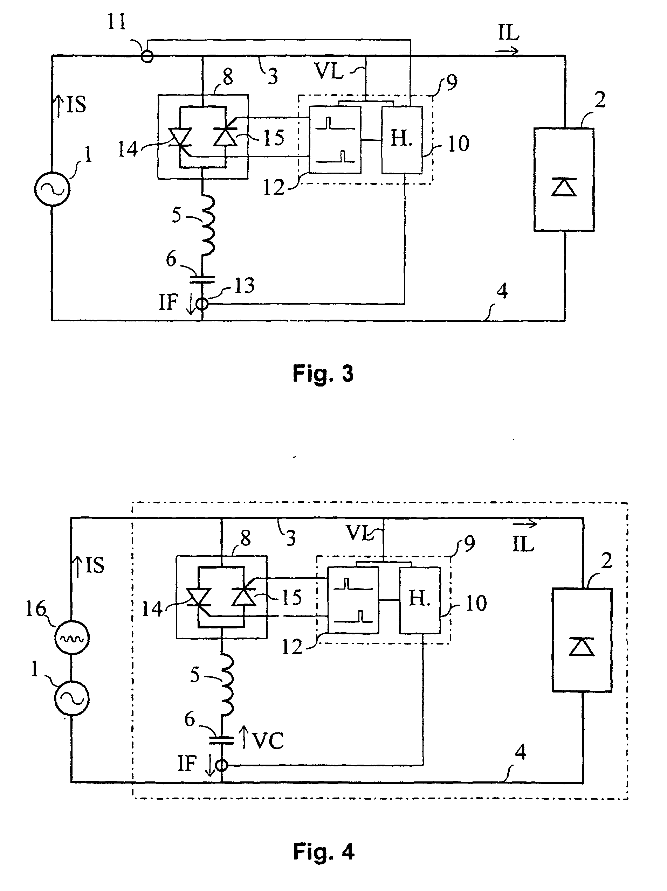

La figure 3 montre un second mode de réalisation dans lequel le capteur de courant 11 est disposé sur une ligne 3 entre la source 1 et la cellule de filtrage passif 5 et 6 en série avec le commutateur 8. Dans ce cas, le capteur de courant 11 mesure le courant de source IS et le circuit de contrôle commande le commutateur de manière à éliminer ou atténuer des courants harmoniques perturbateurs générés par la charge 2 et qui pourraient se propager sur le courant de source. Le circuit de traitement 10 extrait du courant de source IS un signal représentatif d'une harmonique de courant HIS à éliminer et contrôle le générateur 12 pour diminuer ledit signal HIS. Ainsi, lorsqu'un signal HIS apparaît ou lorsque son amplitude augmente le circuit de contrôle 9 commande le commutateur 8 pour adapter le courant de filtrage IF et diminuer le signal HIS.

La figure 4 montre un troisième mode de réalisation dans lequel la grandeur électrique de ligne mesurée est une tension VL de la ligne 3. Dans ce mode de réalisation, le circuit de traitement 10 extrait d'un signal de tension VL mesuré un signal représentatif d'une harmonique de tension HVL à éliminer ou atténuer. Une tension harmonique est représentative d'un courant harmonique circulant dans une impédance. Sur le schéma de la figure 4, la tension harmonique est représentée par un générateur de tension harmonique 16 disposé en série avec la source d'énergie électrique 1.

Dans ce mode de réalisation, le dispositif de filtrage peut éliminer des harmoniques produits par la charge 2 comme dans les deux modes de réalisation précédents représentés sur les figures 2 et 3 mais aussi des harmoniques perturbateurs pouvant venir du réseau. Le dispositif de la figure 4 atténue les perturbations générées par le comportement non-linéaire de la charge 2 et protège ladite charge contre des perturbations produites par d'autres charges du réseau.

Lorsqu'un signal HVL apparaît ou lorsque son amplitude augmente, le circuit de contrôle 9 commande le commutateur 8 pour modifier le courant IF et diminuer le signal HVL.

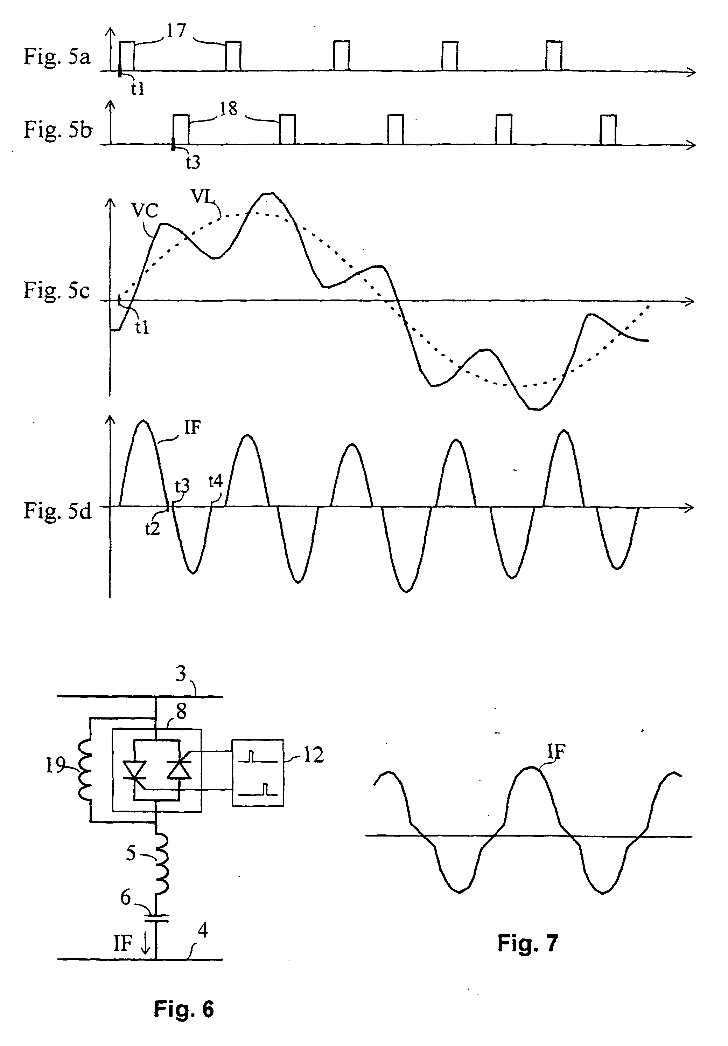

Les figures 5a à 5d montrent des signaux d'un dispositif de filtrage selon un mode de réalisation de l'invention permettant d'éliminer ou d'atténuer une harmonique de courant de rang cinq. Les signaux 17 et 18 d'impulsions fournis par le générateur 12 pour commander les deux thyristors 14 et 15 sont représentés respectivement sur les figures 5a et 5b. Sur la figure 5c sont représentées une courbe représentative d'une tension de ligne VL et une courbe représentative d'une tension VC du condensateur 6. Le courant de filtrage IF est représenté par une courbe de la figure 5d.

Dans le mode de fonctionnement des figures 5a à 5d, à un instant t1, une impulsion du signal 17 commande la conduction du thyristor 14. La tension VL étant supérieure à la tension VC, un courant IF circule dans la cellule de filtrage passif. La forme du courant a la forme d'une demi-sinusoïde dont la période dépend essentiellement des valeurs du condensateur 6 et de l'inductance 5. Le courant IF induit par l'inductance 5 charge le condensateur 6 à une tension VC supérieure à VL puis ce courant s'annule au passage à zéro et le thyristor 14 s'arrête de conduire à l'instant t2.

A un instant t3, une impulsion du signal 18 commande la conduction du thyristor 15. La tension VC étant supérieure à la tension VL, un courant IF de polarité inverse circule dans la cellule de filtrage passif 5 et 6 puis s'arrête à un instant t4 avant l'apparition d'une prochaine impulsion du signal 17.

La fréquence des impulsions de chaque signal 17 ou 18 est sensiblement égale à la fréquence de l'harmonique à atténuer et les signaux 17 et 18 sont décalés sensiblement d'une demi-période correspondant à la fréquence de ladite harmonique à atténuer. Avantageusement, le courant dans la cellule de filtrage traversant un thyristor est interrompu avant qu'une autre impulsion commande la conduction de l'autre thyristor. Par conséquent, la fréquence de résonance de la cellule de filtrage passif 5 et 6 est de préférence supérieure à la fréquence des impulsions de chaque signal 14 ou 15 et supérieure à la fréquence de l'harmonique à atténuer. Ainsi, comme sur la figure 5d, chaque lobe de sinusoïde correspondant à une demi-période se termine avant le début de la conduction du suivant et les thyristors correspondant se bloquent automatiquement.

L'interruption du courant entre deux alternances du courant de filtrage IF assure un contrôle efficace de la fréquence du courant mais produit de petites perturbations lors du passage à zéro. Pour éviter ces perturbations, un dispositif de filtrage selon un mode de réalisation de l'invention représenté sur la figure 6 peut comporter une inductance 19 de lissage connectée en dérivation ou en parallèle sur le commutateur 8. La figure 7 illustre une courbe représentative d'un courant IF de filtrage d'un dispositif selon la figure 6.

Le courant IF de filtrage a, dans ce cas, une variation plus continue en deux alternances consécutives de polarités opposées.

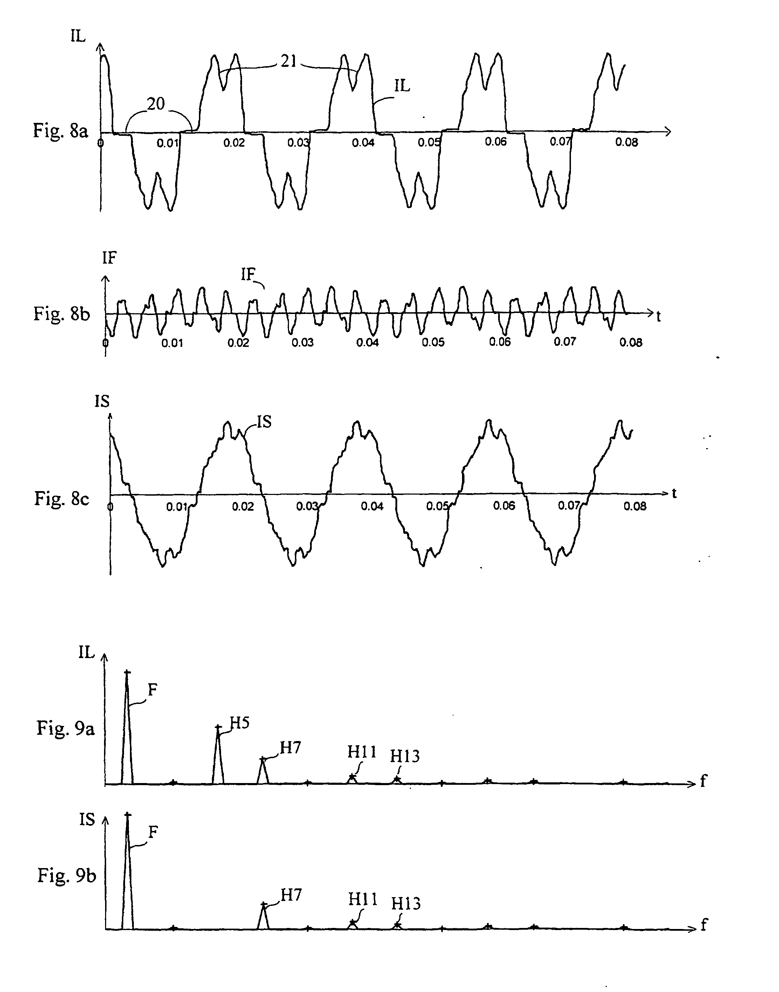

Les figures 8a à 8c illustrent des courbes représentatives de courants circulant dans un circuit électrique comportant un dispositif de filtrage selon l'invention. La figure 8a représente un courant IL circulant dans une charge 2 perturbatrice. La figure 8b représente un courant de filtrage IF destiné à compenser les perturbations générées par le courant de charge à une fréquence harmonique prédéterminée. La figure 8c représente un courant de source filtré correspondant à la somme du courant de ligne IL et du courant de filtrage IF.

Le courant IL de la figure 8a a, dans ce mode de réalisation, une fréquence fondamentale de 50Hz correspondant à la fréquence de la source de tension électrique 1. La charge 2, comportant notamment un redresseur, génère sur la ligne 3 une perturbation d'harmonique cinq par rapport à la fréquence fondamentale. Ce courant IL perturbé représenté sur la figure 8a comporte des parties plates 20 où le courant est nul et des crêtes de sinusoïdes perturbées par des creux de courant 21.

Le circuit de traitement 10 analyse le courant de la figure 8a et extrait amplitude et la phase de l'harmonique cinq de courant perturbateur. Ensuite, le générateur de signaux de commande envoie des impulsions au commutateur 8 pour générer un courant de filtrage IF. Ce courant de filtrage représenté sur la figure 8b compare le courant de l'harmonique cinq perturbateur.

Le courant IF de filtrage rétablit un courant de source IS sensiblement sinusoïdal représenté sur la figure 8c. Ainsi, les perturbations d'harmonique cinq générées par la charge ne se propagent pas dans le réseau de distribution électrique.

Des courbes représentant l'analyse spectrale en fonction de la fréquence des courants de charge IL et de source IS sont représentées respectivement sur les figures 9a et 9b. Le courant IL a un fondamental F et un harmonique cinq H5 d'amplitudes élevées ainsi que d'autres harmoniques, notamment des harmoniques sept H7, onze H11 et treize H13.

Dans ce mode de réalisation, le dispositif de filtrage atténue les courants d'harmonique cinq H5, par conséquent, ladite harmonique H5 n'est plus présente dans le spectre de fréquence du courant IS de la figure 9b. Le courant de fréquence fondamentale F et les autres harmoniques H7, H11 et 13 se retrouvent sur le courant de source IS.

Pour améliorer le filtrage des courants harmoniques, un dispositif selon l'invention peut comporter plusieurs cellules de filtrage passif commandées par des commutateurs et un circuit de contrôle 9. Par exemple, un dispositif de filtrage peut comporter une cellule pour atténuer les harmoniques cinq H5 et une cellule pour atténuer les harmoniques sept H7 qui sont les plus élevées dans l'analyse spectrale de la figure 9a.

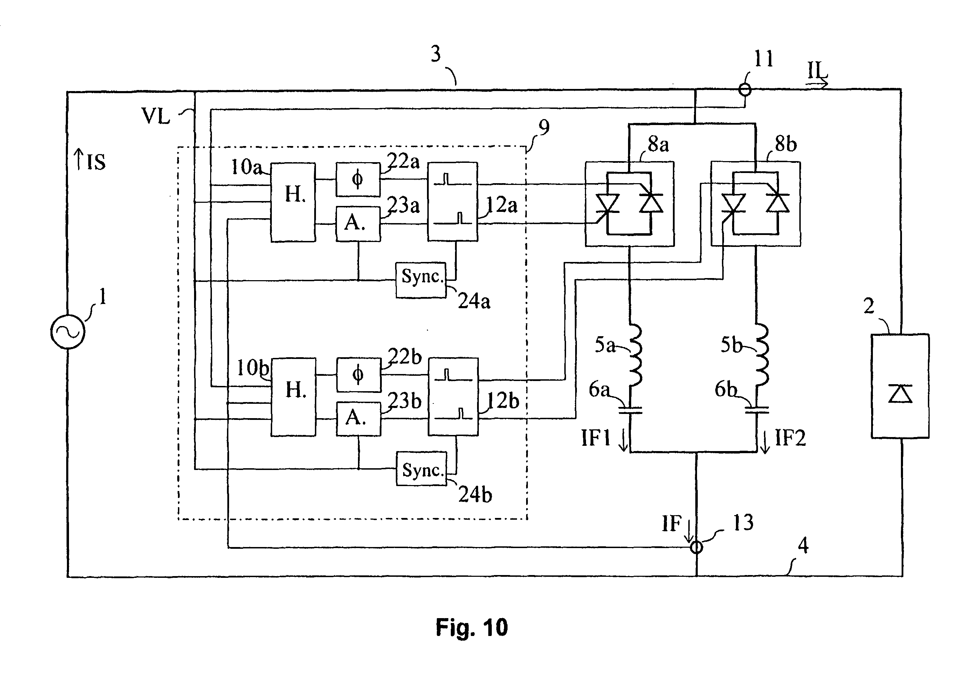

Un mode de réalisation d'un dispositif de filtrage permettant d'atténuer ou d'éliminer deux harmoniques est représenté sur la figure 10. Ce dispositif comporte une première cellule comportant une inductance 5a et un condensateur 6a en série avec un commutateur 8a pour compenser un premier courant harmonique et une seconde cellule comportant une inductance 5b et un condensateur 6b en série avec un commutateur 8b pour compenser un second courant harmonique. Le dispositif de contrôle 9 comporte un premier circuit de traitement 10a et un premier générateur 12a pour commander le commutateur 8a et un second circuit de traitement 10b et un second générateur 12a pour commander le commutateur 8b.

Dans ce mode de réalisation, un premier courant de filtrage IF1, ayant une première fréquence pour compenser une première harmonique, traverse la première cellule 5a-6a, et un second courant de filtrage IF2, ayant une seconde fréquence pour compenser une seconde harmonique, traverse la seconde cellule 5b-6b. Le courant de filtrage IF est alors la somme de deux courants IF1 et IF2 de fréquences différentes.

Chaque circuit de traitement 10a et 10b reçoit des signaux représentatifs du courant de ligne IL, du courant de filtrage IF et de la tension de ligne VL. Le premier circuit 10a extrait des signaux de courant qu'il reçoit des signaux représentatifs d'une première fréquence harmonique. Ces signaux sont appliqués à l'entrée d'un premier module de contrôle 22d de la phase du premier courant de filtrage IF1 ayant la première fréquence harmonique. Un premier module de contrôle d'amplitude 23a reçoit les signaux extraits par le premier circuit de traitement 10a. Ce circuit contrôle l'amplitude du premier courant de filtrage IF1. Cette amplitude peut avantageusement être modulée en fonction de la tension VL de la ligne 3. Pour cela, le circuit 23a reçoit un signal représentatif de la tension de ligne VL.

Les modules de contrôle de phase et d'amplitude 22a et 23a contrôlent le premier générateur 12a. Ainsi, le générateur 12a fournit des impulsions de commande en fonction de l'amplitude et de la phase des signaux ayant la première fréquence harmonique. Avantageusement, les signaux d'impulsion 17 et 18 fournis par le générateur 12a peuvent être synchronisés avec la tension de ligne VL. A cet effet, un premier module de synchronisation 24a est disposé entre la tension de ligne VL et le générateur 12a.

Le contrôle du second courant de filtrage IF2 se fait de la même manière que le premier. Le second circuit de traitement 10b extrait, des signaux de courant qu'il reçoit, des signaux représentatifs d'une seconde fréquence harmonique. Un second module de contrôle de phase 22b et un second module de contrôle d'amplitude 23b sont disposés entre le circuit de traitement 10b et le générateur 12b. La synchronisation des impulsions fournies par le générateur 12b est assurée par un second module de synchronisation 24b.

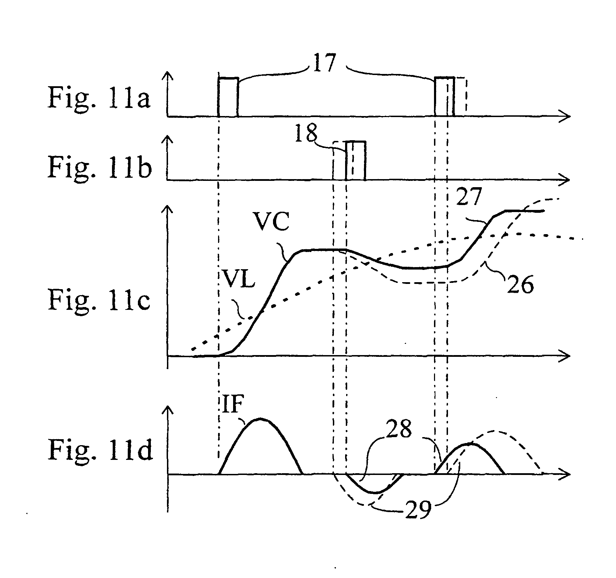

Les figures 11a à 11d montrent des signaux d'un dispositif de filtrage comportant un contrôle de l'amplitude du courant de filtrage IF. Pour contrôler ladite amplitude, les signaux d'impulsions 17 et 18 ne sont plus exactement en opposition de phase mais peuvent être décalés en avance ou en retard par rapport à une position médiane. La figure 1 la montre une première impulsion 17 de référence et une seconde impulsion 17 en avance par rapport à sa position normale. La figure 11b montre une impulsion 18 en retard par rapport à sa position médiane normale. La figure 11c montre la tension de ligne VL et la tension du condensateur VC en fonction des impulsions normales (courbes 26) ou modulées (courbe 27). La figure 11d montre le courant IF contrôlé en amplitude. Sur cette figure, le courant IF a une amplitude réduite (courbe 28) par rapport à une courbe initiale 29 sans modulation.

Bien que les impulsions des signaux 17 et 18 de commande des thyristors ne soient plus réguliers, la fréquence moyenne de chaque signal demeure identique à la fréquence de l'harmonique à atténuer.

Avantageusement, dans des modes de réalisation de l'invention, des générateurs d'impulsions 12, 12a ou 12b peuvent aussi fournir des impulsions en fonction de la tension VC de condensateurs 6, 6a ou 6b de cellules de filtrage.
Les dispositifs de filtrage selon invention peuvent être utilisés avec des filtres actifs. Dans ce cas, par exemple, des dispositifs de filtrage selon un mode de réalisation de l'invention atténuent des perturbations de forte puissance et un filtre actif atténue des autres perturbations harmoniques de fréquences différentes. Par conséquent, le filtrage actif peut être de faible puissance.

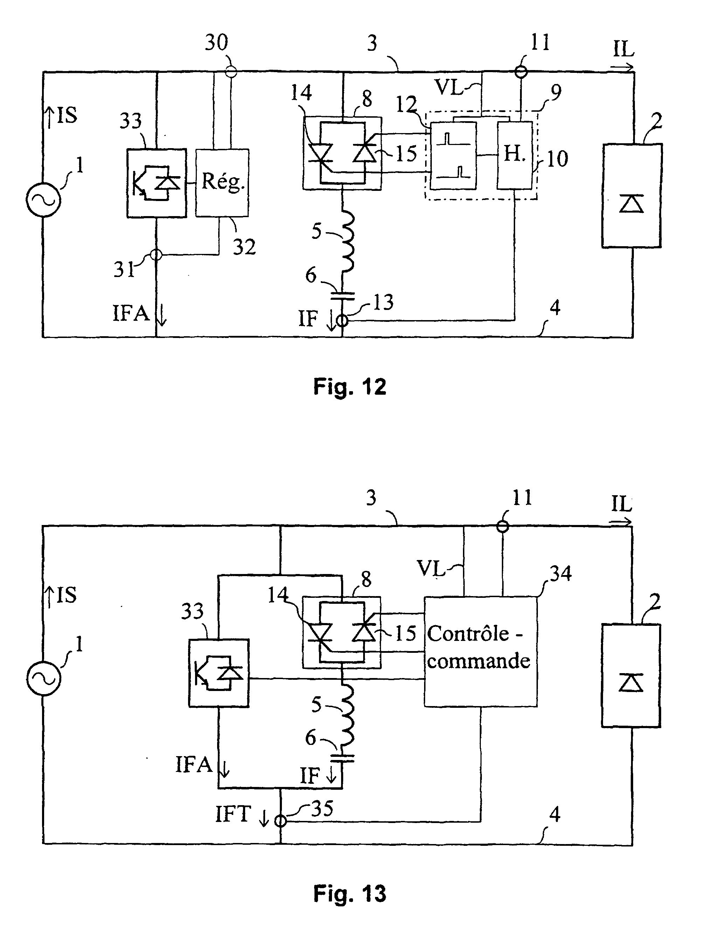

Un exemple d'une telle association est représenté sur la figure 12. Dans ce mode de réalisation, un filtre actif comportant un circuit électronique 33 de puissance est connecté aux lignes 3 et 4 d'alimentation. Le contrôle du circuit 33 est assuré par un circuit de régulation 32 connecté audit circuit 33, à un capteur de courant 30 fournissant un signal représentatif du courant de ligne IL, et à un capteur de courant 31 fournissant un signal représentatif d'un courant de filtrage actif IFA. Le circuit 32 peut recevoir aussi un signal représentatif de la tension de ligne VL.

Avantageusement, des filtres actifs peuvent être intégrés à des dispositifs de filtrage selon l'invention. Un schéma d'un mode de réalisation d'un dispositif de filtrage intégrant un filtre actif est représenté sur la figure 13. Dans ce mode de réalisation, un circuit de contrôle 34 est connecté au commutateur 8 et au filtre actif 33 pour contrôler les deux types de filtrage. Pour réduire notamment le nombre de capteurs, le circuit 34 reçoit des signaux représentatifs de courants de lignes IL fournis par le capteur 11, de tension de ligne VL, et de courant de filtrage total IFT fournit par un capteur 35 mesurant le courant IFA circulant dans le filtre actif et le courant de filtrage IF circulant dans la cellule comportant l'inductance 5 et le condensateur 6. Dans ce mode de réalisation, le circuit 34 comporte notamment les fonctions des circuits 9 et 34 pour traiter l'ensemble des signaux et contrôler la totalité du filtrage.

Les circuits des dispositifs de contrôle 9 peuvent être réalisés de manière discrète en composants numériques ou analogiques ou intégrés partiellement ou totalement sous une forme programmée dans un dispositif à microprocesseur.

Des dispositifs selon des modes de réalisation de l'invention peuvent être disposés en parallèle dans une installation électrique. Chaque dispositif pouvant fonctionner pour atténuer des harmoniques identiques ou différents. Ils peuvent également être associés à des dispositifs de filtrage différents actifs ou passifs, ou à des dispositifs de compensation d'énergie réactive.

Dans un réseau électrique triphasé, des dispositifs de filtrage selon l'invention peuvent être connectés en étoile ou en triangle.

Les commutateurs 8 comportent de préférence des thyristors permettant de commuter une puissance électrique élevée avec de faibles pertes mais d'autres composants semi-conducteurs de puissance peuvent parfaitement les remplacer.

## Revendications

1. Dispositif de filtrage comportant :
- au moins une cellule de filtrage passif (5, 6, 5a, 6a, 5b, 6b) connectée à une ligne (3) d'un réseau électrique susceptible d'être traversée par des courants harmoniques perturbateurs,
- des moyens de commutation électroniques (8) connectés en série avec ladite cellule de filtrage passif, et
- des moyens de contrôle (9) connectés auxdits moyens de commutation et à des premiers moyens de mesure (11) de grandeur électrique de ligne (IL, IS, VL), les moyens de contrôle commandant les moyens de commutation en fonction d'au moins une fréquence harmonique prédéterminée (H5, H7) d'un signal représentatif de la grandeur électrique de ligne fourni par les premiers moyens de mesure,
dispositif **caractérisé en ce que** les moyens de contrôle (9) fournissent aux moyens de commutation (8) un premier signal d'impulsions (17) pour commander la conduction des alternances positives d'un courant de filtrage (IF) et un second signal d'impulsions (18) pour commander la conduction des alternances négatives dudit courant de filtrage (IF) de manière à atténuer des courants perturbateurs ayant ladite au moins une fréquence harmonique.

2. Dispositif de filtrage selon la revendication 1, **caractérisé en ce que** la fréquence de résonance de ladite au moins une cellule de filtrage passif (5, 5a, 6a, 5b, 6b) est supérieure à au moins une fréquence harmonique prédéterminée (H5, H7).

3. Dispositif de filtrage selon l'une des revendications 1 ou 2, **caractérisé en ce que** les moyens de commutation (8) sont commandés en fermeture par des signaux d'impulsions et en ouverture par un passage à zéro d'un courant de filtrage (IF) qui les traverse.

4. Dispositif de filtrage selon l'une quelconque des revendications 1 à 3, **caractérisé en ce que** les moyens de commutation (8) comportent deux thyristors (14, 15) connectés en tête-bêche.

5. Dispositif de filtrage selon l'une quelconque des revendications 1 à 4, **caractérisé en ce que** les premier et second signaux d'impulsions (17, 18) sont sensiblement en opposition de phase.

6. Dispositif de filtrage selon l'une quelconque des revendications 1 à 5, **caractérisé en ce que** les moyens de contrôle comportent des moyens générateurs d'impulsions (12, 12a, 12b) fournissant les premier et second signaux d'impulsions (17, 18), et des moyens de synchronisation connectés à la ligne du réseau et auxdits moyens générateurs pour synchroniser les signaux d'impulsions avec un signal représentatif de la tension de ligne (VL) du réseau.

7. Dispositif de filtrage selon l'une quelconque des revendications 1 à 6, **caractérisé en ce que** les moyens de contrôle comportent des moyens de modulation (23a, 23b) de la phase entre les premier et second signaux d'impulsions (17, 18) en fonction d'un signal représentatif de la tension (VL) de ladite au moins ligne (3) du réseau.

8. Dispositif de filtrage selon l'une quelconque des revendications 1 à 7, **caractérisé en ce que** les moyens de contrôle comportent des moyens de traitement (10, 10a, 10b) de signaux connectés aux premiers moyens de mesure de grandeur électrique de ligne pour extraire un signal représentatif de ladite au moins une fréquence harmonique (H5, H7) dudit signal de grandeur électrique de ligne.

9. Dispositif de filtrage selon la revendication 8, **caractérisé en ce qu'**il comporte des seconds moyens de mesure de courant (13) connectés aux moyens de traitement (10) de signaux pour fournir un signal représentatif d'un courant de filtrage (IF) circulant dans ladite au moins une cellule de filtrage, lesdits moyens de traitement de signaux comparant le signal représentatif d'un courant de filtrage et le signal représentatif de ladite au moins une fréquence harmonique du signal de grandeur électrique de ligne.

10. Dispositif de filtrage selon la revendication 9, **caractérisé en ce que** les moyens de traitement de signaux (10, 10a, 10b) déterminent une différence d'amplitude entre le signal représentatif de ladite au moins une fréquence harmonique (HS, H7) du signal de grandeur électrique de ligne et le signal représentatif d'un courant de filtrage (IF) pour asservir la commande des moyens de commutation (8) de manière à réduire ladite au moins différence d'amplitude.

11. Dispositif de filtrage selon l'une des revendications 9 ou 10, **caractérisé en ce que** les moyens de traitement de signaux déterminent un déphasage entre le signal représentatif de ladite au moins une fréquence harmonique du signal de grandeur électrique de ligne (H5, H7) et le signal représentatif d'un courant de filtrage (IF) pour commander les moyens de commutation (8) de manière à réduire ledit déphasage.

12. Dispositif de filtrage selon l'une quelconque des revendications 1 à 11, **caractérisé en ce qu'**il comporte une inductance (19) disposée en parallèle sur les moyens de commutation (8).

13. Dispositif de filtrage selon l'une quelconque des revendications 1 à 12, **caractérisé en ce qu'**il comporte plusieurs cellules de filtrage passif (5, 6, 6a, 5b, 6b) accordées à des fréquences différentes et commandées chacune par des moyens de commutation différents (12, 12a, 12b), les moyens de contrôle commandant chaque moyen de commutation en fonction de fréquences harmoniques différentes (H5, H7).

14. Dispositif de filtrage selon l'une quelconque des revendications 1 à 13, **caractérisé en ce que** les premiers moyens de mesure de grandeur électrique de ligne comportent des moyens de mesure de courant (11) disposés sur ladite ligne du réseau entre une charge électrique (3) perturbatrice et au moins une cellule de filtrage (5, 6).

15. Dispositif de filtrage selon l'une quelconque des revendications 1 à 13, **caractérisé en ce que** les premiers moyens de mesure de grandeur électrique de ligne comportent des moyens de mesure de courant (11) disposés sur ladite ligne du réseau entre une source d'énergie électrique (1) et ladite au moins une cellule de filtrage (5, 6).

16. Dispositif de filtrage selon l'une quelconque des revendications 1 à 15, **caractérisé en ce que** les premiers moyens de mesure de grandeur électrique comportent des moyens de mesure de tension (VL) connectés à ladite au moins une ligne du réseau.

17. Dispositif de filtrage selon l'une quelconque des revendications 1 à 15, **caractérisé en ce qu'**il comporte des moyens de filtrage actif (33) connectés à une ligne (3) d'un réseau électrique, un dispositif de contrôle commun connecté auxdits moyens de commutation et aux moyens de filtrage actif, et des moyens de mesure fournissant un signal représentatif d'un courant de filtrage total (IFT), ledit dispositif de contrôle commun comportant les moyens de contrôle connectés aux moyens de commutation.

18. Appareil électrique **caractérisé en ce qu'**il comporte au moins un dispositif de filtrage selon l'une quelconque des revendications 1 à 17.

19. Appareil électrique selon la revendication 18 **caractérisé en ce qu'**il comporte un dispositif de filtrage actif (30, 31, 32, 33).

20. Appareil électrique selon la revendication 19 **caractérisé en ce qu'**il comporte un dispositif de contrôle commun (34) pour commander le dispositif de filtrage actif et les moyens de commutation (8).

## Patentansprüche

1. Filtereinrichtung mit
- mindestens einem passiven Filterglied (5, 6, 5a, 6a, 5b, 6b), das an eine Leitung (3) eines elektrischen Netzes angeschlossen ist, über die verzerrende Oberschwingungsströme fließen können,
- elektronischen Schaltmitteln (8), die zu dem genannten Filterglied in Reihe geschaltet sind, sowie
- mit Steuermitteln (9), die an die genannten Schaltmittel und an erste Messmittel (11) zur Messung elektrischer Leitungsgrößen (IL, IS, VL) angeschlossen sind, wobei die Steuermittel die Schaltmittel in Abhängigkeit von mindestens einer bestimmten Oberschwingungsfrequenz (H5, H7) eines Signals ansteuern, das die von den ersten Messmitteln gelieferte elektrische Leitungsgröße abbildet,
**dadurch gekennzeichnet, dass** die Steuermittel (9) die Schaltmittel (8) mit einem ersten Impulssignal (17) zur Steuerung der Leitung der positiven Halbwellen eines Filterstroms (IF) sowie mit einem zweiten Impulssignal (18) zur Steuerung der Leitung der negativen Halbwellen des genannten Filterstroms (IF) beaufschlagen, derart dass mit der mindestens einen Oberschwingungsfrequenz behaftete Störströme gedämpft werden.

2. Filtereinrichtung nach Anspruch 1, **dadurch gekennzeichnet, dass** die Resonanzfrequenz des genannten mindestens einen passiven Filterglieds (5, 5a, 6a, 5b, 6b) höher ist als mindestens eine bestimmte Oberschwingungsfrequenz (H5, H7).

3. Filtereinrichtung nach einem der Ansprüche 1 oder 2, **dadurch gekennzeichnet, dass** die Einschaltsteuerung der Schaltmittel (8) durch Impulssignale und die Ausschaltsteuerung durch einen Stromnulldurchgang eines über die Schaltmittel fließenden Filterstroms (IF) erfolgt.

4. Filtereinrichtung nach irgendeinem der Ansprüche 1 bis 3, **dadurch gekennzeichnet, dass** die Schaltmittel (8) zwei in Anti-Parallelschaltung betriebene Thyristoren (14, 15) umfassen.

5. Filtereinrichtung nach irgendeinem der Ansprüche 1 bis 4, **dadurch gekennzeichnet, dass** das erste und das zweite Impulssignal (17, 18) annähernd gegenphasig sind.

6. Filtereinrichtung nach irgendeinem der Ansprüche 1 bis 5, **dadurch gekennzeichnet, dass** die Steuermittel Impulsgeneratormittel (12, 12a, 12b), die das erste und das zweite Impulssignal (17, 18) liefern, sowie Synchronisiermittel umfassen, die an die Netzleitung sowie an die genannten Impulsgeneratormittel angeschlossen sind, um die Impulssignale mit einem, die Leitungsspannung (VL) des Netzes abbildenden Signal zu synchronisieren.

7. Filtereinrichtung nach irgendeinem der Ansprüche 1 bis 6, **dadurch gekennzeichnet, dass** die Steuermittel Modulationsmittel (23a, 23b) zur Anpassung der Phasenverschiebung zwischen dem ersten und dem zweiten Impulssignal (17, 18) in Abhängigkeit von einem die Spannung (VL) in der genannten mindestens einen Leitung (3) des Netzes abbildenden Signal umfassen.

8. Filtereinrichtung nach irgendeinem der Ansprüche 1 bis 7, **dadurch gekennzeichnet, dass** die Steuermittel Signalverarbeitungsmittel (10, 10a, 10b) umfassen, die an die ersten Messmittel zur Messung einer elektrischen Leitungsgröße angeschlossen sind, um ein Signal zu gewinnen, das die genannte, mindestens eine Oberschwingungsfrequenz (H5, H7) des genannten Signals der elektrischen Leitungsgröße abbildet.

9. Filtereinrichtung nach Anspruch 8, **dadurch gekennzeichnet, dass** sie an die Signalverarbeitungsmittel (10) angeschlossene zweite Strommessmittel (13) zur Lieferung eines Signals umfasst, das einen über das mindestens eine Filterglied fließenden Filterstrom (IF) abbildet, wobei die genannten Signalverarbeitungsmittel das einen Filterstrom abbildende Signal mit dem Signal vergleichen, das die genannte, mindestens eine Oberschwingungsfrequenz des Signals der elektrischen Leitungsgröße abbildet.

10. Filtereinrichtung nach Anspruch 9, **dadurch gekennzeichnet, dass** die Signalverarbeitungsmittel (10, 10a, 10b) eine Amplitudendifferenz zwischen dem Signal, das die genannte mindestens eine Oberschwingungsfrequenz (H5, H7) des Signals der elektrischen Leitungsgröße abbildet, und dem einen Filterstrom (IF) abbildenden Signal bestimmen, um die Schaltmittel (8) so anzusteuern, dass die genannte, mindestens eine Amplitudendifferenz vermindert wird.

11. Filtereinrichtung nach einem der Ansprüche 9 oder 10, **dadurch gekennzeichnet, dass** die Signalverarbeitungsmittel eine Phasenabweichung zwischen dem Signal, das die genannte mindestens eine Oberschwingungsfrequenz (H5, H7) des Signals der elektrischen Leitungsgröße abbildet, und dem einen Filterstrom (IF) abbildenden Signal bestimmen, um die Schaltmittel (8) so anzusteuern, dass die genannte Phasenabweichung vermindert wird.

12. Filtereinrichtung nach irgendeinem der Ansprüche 1 bis 11, **dadurch gekennzeichnet, dass** sie eine Spule (19) umfasst, die parallel zu den Schaltmitteln (8) geschaltet ist.

13. Filtereinrichtung nach irgendeinem der Ansprüche 1 bis 12, **dadurch gekennzeichnet, dass** sie mehrere, auf unterschiedliche Frequenzen abgestimmte und durch jeweils unterschiedliche Schaltmittel (12, 12a, 12b) angesteuerte passive Filterglieder (5, 6, 6a, 5b, 6b) umfasst, wobei die Steuermittel jedes Schaltmittel in Abhängigkeit von unterschiedlichen Oberschwingungsfrequenzen (H5, H7) ansteuern

14. Filtereinrichtung nach irgendeinem der Ansprüche 1 bis 13, **dadurch gekennzeichnet, dass** die ersten Messmittel zur Messung einer elektrischen Leitungsgröße Strommessmittel (11) umfassen, die zwischen einer elektrischen Störquelle (3) und mindestens einem Filterglied (5, 6) in die genannte Leitung des Netzes geschaltet sind.

15. Filtereinrichtung nach irgendeinem der Ansprüche 1 bis 13, **dadurch gekennzeichnet, dass** die ersten Messmittel zur Messung einer elektrischen Leitungsgröße Strommessmittel (11) umfassen, die zwischen eine elektrische Energiequelle (1) und das genannten mindestens eine Filterglied (5, 6) in die genannte Leitung des Netzes geschaltet sind.

16. Filtereinrichtung nach irgendeinem der Ansprüche 1 bis 15, **dadurch gekennzeichnet, dass** die ersten Messmittel zur Messung einer elektrischen Größe Mittel zur Messung einer Spannung (VL) umfassen, die an die genannte, mindestens eine Leitung des Netzes angeschlossen sind.

17. Filtereinrichtung nach irgendeinem der Ansprüche 1 bis 15, **dadurch gekennzeichnet, dass** sie an eine Leitung (3) eines elektrischen Netzes angeschlossene aktive Filtermittel (33), eine an die genannten Schaltmittel und die aktiven Filtermittel angeschlossene gemeinsame Steuereinrichtung sowie Messmittel umfasst, die ein, einen Gesamtfilterstrom (IFT) abbildendes Signal liefern, wobei die genannte gemeinsame Steuereinrichtung die an die Schaltmittel angeschlossenen Steuermittel umfasst.

18. Elektrisches Schaltgerät, **dadurch gekennzeichnet, dass** es mindestens eine Filtereinrichtung nach irgendeinem der Ansprüche 1 bis 17 umfasst.

19. Elektrisches Schaltgerät nach Anspruch 18, **dadurch gekennzeichnet, dass** es eine aktive Filtereinrichtung (30, 31, 32, 33) umfasst.

20. Elektrisches Schaltgerät nach Anspruch 19, **dadurch gekennzeichnet, dass** es eine gemeinsame Steuereinrichtung (34) zur Ansteuerung der aktiven Filtereinrichtung und der Schaltmittel (8) umfasst.

## Claims

1. Filtering device comprising:
- at least one passive filtering cell (5, 6, 5a, 6a, 5b, 6b) connected to a line (3) of an electric power system wherein disturbance harmonic currents are liable to flow,
- electronic switching means (8) connected in series with said passive filtering cell, and
- control means (9) connected to said switching means and to first means (11) for measuring an electric line quantity (IL, IS, VL), the control means controlling the switching means according to at least one predetermined harmonic frequency (H5, H7) of a signal representative of the electric line quantity supplied by the first means for measuring,
device **characterized in that** the control means (9) supply to the switching means (8) a first pulse signal (17) to order turn-on of the positive half-waves of a filtering current (IF) and a second pulse signal (18) to order turn-on of the negative half-waves of said filtering current (IF) so as to attenuate disturbance currents having said at least one harmonic frequency.

2. Filtering device according to claim 1, **characterized in that** the resonance frequency of said at least one passive filtering cell (5, 6, 5a, 6a, 5b, 6b) is higher than at least one predetermined harmonic frequency (H5, H7).

3. Filtering device according to claim 1 or 2, **characterized in that** the switching means (8) are controlled to closing by pulse signals and to opening by zero crossing of a filtering current (IF) flowing therethrough.

4. Filtering device according to any one of the claims 1 to 3, **characterized in that** the switching means (8) comprise two thyristors (14, 15) connected head-to-tail.

5. Filtering device according to any one of the claims 1 to 4, **characterized in that** the first and second pulse signals (17, 18) are appreciably in phase opposition.

6. Filtering device according to any one of the claims 1 to 5, **characterized in that** the control means comprise pulse generating means (12, 12a, 12b) supplying the first and second pulse signals (17, 18) and synchronisation means connected to the power system line and to said generating means to synchronise the pulse signals with a signal representative of the power system line voltage (VL).

7. Filtering device according to any one of the claims 1 to 6, **characterized in that** the control means comprise means for phase modulation (23a, 23b) between the first and second pulse signals (17, 18) according to a signal representative of the voltage (VL) of said at least one power system line (3).

8. Filtering device according to any one of the claims 1 to 7, **characterized in that** the control means comprise signal processing means (10, 10a, 10b) connected to the first means for measuring an electric line quantity to extract a signal representative of said at least one harmonic frequency (H5, H7) from said electric line quantity signal.

9. Filtering device according to claim 8, **characterized in that** it comprises second current measuring means (13) connected to the signal processing means (10) to supply a signal representative of a filtering current (IF) flowing in said at least one filtering cell, said signal processing means comparing the signal representative of a filtering current and the signal representative of said at least one harmonic frequency of the electric line quantity signal.

10. Filtering device according to claim 9, **characterized in that** the signal processing means (10, 10a, 10b) determine an amplitude difference between the signal representative of said at least one harmonic frequency (H5, H7) of the electric line quantity signal and the signal representative of a filtering current (IF) to servo control the switching means (8) so as to reduce said at least amplitude difference.

11. Filtering device according to one of the claims 9 or 10, **characterized in that** the signal processing means determine a phase difference between the signal representative of said at least one harmonic frequency of the electric line quantity signal (H5, H7) and the signal representative of a filtering current (IF) to control the switching means (8) so as to reduce said phase difference.

12. Filtering device according to any one of the claims 1 to 11, **characterized in that** it comprises an inductor (19) connected in parallel with the switching means (8).

13. Filtering device according to any one of the claims 1 to 12, **characterized in that** it comprises several passive filtering cells (5, 6, 6a, 5b, 6b) tuned to different frequencies and each controlled by different switching means (12, 12a, 12b), the control means controlling each switching means according to different harmonic frequencies (H5, H7).

14. Filtering device according to any one of the claims 1 to 13, **characterized in that** the first means for measuring an electric line quantity comprise current measuring means (11) arranged on said power system line between a disturbance electric load (3) and at least one filtering cell (5, 6).

15. Filtering device according to any one of the claims 1 to 13, **characterized in that** the first means for measuring an electric line quantity comprise current measuring means (11) arranged on said power system line between an electric power source (1) and said at least one filtering cell (5, 6).

16. Filtering device according to any one of the claims 1 to 15, **characterized in that** the first means for measuring an electric quantity comprise voltage measuring means (VL) connected to said at least one power system line.

17. Filtering device according to any one of the claims 1 to 15, **characterized in that** it comprises active filtering means (33) connected to a line (3) of an electric power system, a common control device connected to said switching means and to the active filtering means, and measuring means supplying a signal representative of a total filtering current (IFT), said common control device comprising the control means connected to the switching means.

18. Electrical apparatus **characterized in that** it comprises at least one filtering device according to any one of the claims 1 to 17.

19. Electrical apparatus according to claim 18 **characterized in that** it comprises an active filtering device (30, 31, 32, 33).

20. Electrical apparatus according to claim 19 **characterized in that** it comprises a common control device (34) to control the active filtering device and the switching means (8).
